# EUROPEAN PATENT APPLICATION

(11) **EP 4 296 074 A1**
(43) Date of publication of application: **27.12.2023**
(21) Application number: 21926750.7
(22) Date of filing: 06.12.2021
(51) Int. Cl.: B60C 1/00, C08G 59/14, C08L 21/00, C08L 63/00, C08K 3/36

(54) **DIENE-GRAFTED EPOXY RESIN, PRODUCTION METHOD FOR DIENE-GRAFTED EPOXY RESIN, RUBBER COMPOSITION, AND TIRE**

(30) Priority: 16.02.2021 JP 2021022866
(71) Applicant: BRIDGESTONE CORPORATION, Chuo-ku Tokyo 104-8340 (JP)
(72) Inventor: SHODA, Yasuhiro, Tokyo 104-8340 (JP); KOSAI, Tomoyuki, Tokyo 104-8340 (JP); SONE, Ryota, Tokyo 104-8340 (JP)
(74) Representative: Marks & Clerk LLP
(86) International application number: PCT/JP2021/044786
(87) International publication number: WO 2022/176324

(57) **Abstract**

Provided is an epoxy resin which can improve the durability when used with a rubber material, and a method of producing an epoxy resin. In the present disclosure, a diene-based polymer is grafted onto a main chain of an epoxy resin.

## Description

### TECHNICAL FIELD

This disclosure relates to a diene-grafted epoxy resin, a method of producing a diene-grafted epoxy resin, a rubber composition, and a tire.

### BACKGROUND

In recent years, there is a strong demand for reducing environmental burdens in the rubber industry, and attention is being paid to techniques that can reduce the usage of rubber materials by improving the durability.

Known examples of such techniques include adding a filler such as carbon black or silica to a diene-based rubber material to improve the durability. The molecular design of the filler and the filler-polymer interface is being studied, to achieve further improvement in durability.

An epoxy resin, which is a resin material that contributes to durability, is known to have high strength and elastic modulus when cured, and it is known to have excellent heat resistance and chemical resistance. Therefore, the epoxy resin is used in various applications in the industrial field. On the other hand, a cured product of an epoxy resin has low flexibility and has problems with fracture resistance against strain. When a cured product of an epoxy resin is used in automobiles or electrical components, cracks may occur due to the application of vibration and force, and it is desired to solve this problem.

Therefore, JP S58-49719 A (PTL 1), JP S59-36124 A (PTL 2), and JP S61-228060 A (PTL 3) describe terminal rubber-modified epoxy resins obtained by reacting butadiene rubber or acrylonitrile butadiene rubber at a terminal of an epoxy resin, as a technique for improving the flexibility of an epoxy resin.

Further, JP 2016-199763 A (PTL 4) describes a technique of containing an epoxy resin and fine polymer particles with a core-shell structure to improve the adhesiveness, toughness, and impact resistance of a cured product.

### CITATION LIST

### Patent Literature

PTL 1: JP S58-49719 A
PTL 2: JP S59-36124 A
PTL 3: JP S61-228060 A
PTL 4: JP 2016-199763 A

### SUMMARY

### (Technical Problem)

However, since a cured product of an epoxy resin has high polarity and low compatibility with a rubber material, sufficient durability cannot be obtained when it is contained in a rubber composition.

The terminal rubber-modified epoxy resins of PTLS 1 to 3 and the epoxy resin of PTL 4 also have this problem. It is desired to have further improvement in terms of improving the durability such as cut resistance, wear resistance, and fatigue resistance when used with a rubber material.

It could thus be helpful to provide an epoxy resin which can improve the durability when used with a rubber material, and a method of producing an epoxy resin.

It could also be helpful to provide a rubber composition and a tire that are excellent in durability such as cut resistance, wear resistance, and fatigue resistance.

### (Solution to Problem)

As a result of extensive studies, we have found that, by grafting a predetermined diene-based polymer to a main chain of an epoxy resin, the reactivity between the diene-based polymer-grafted epoxy resin and a rubber material is enhanced, and the compatibility of the epoxy resin is improved, which significantly improves the durability (cut resistance, wear resistance, fatigue resistance, etc.) of the rubber material. Further, we have found that the epoxy resin grafted with a predetermined diene-based polymer is better in flexibility, adhesiveness, and other properties than an epoxy resin alone, thereby completing the present disclosure.

The present disclosure is based on the above-mentioned findings, and the primary features thereof are as follows.

In a diene-grafted epoxy resin of the present disclosure, a diene-based polymer is grafted onto a main chain of an epoxy resin.

The above configuration improves the durability when used with a rubber material.

A rubber composition of the present disclosure contains a rubber component and the diene-grafted epoxy resin of the present disclosure.

The above configuration can realize excellent durability (cut resistance, wear resistance, fatigue resistance, etc.).

A tire of the present disclosure uses the rubber composition of the present disclosure.

The above configuration can realize excellent durability (cut resistance, wear resistance, fatigue resistance, etc.).

### (Advantageous Effect)

According to the present disclosure, it is possible to provide an epoxy resin which can improve the durability when used with a rubber material, and a method of producing an epoxy resin.

Further, according to the present disclosure, it is possible to provide a rubber composition and a tire that are excellent in durability such as cut resistance, wear resistance, and fatigue resistance.

### DETAILED DESCRIPTION

The following describes the present disclosure in detail based on embodiments.

### (Diene-grafted epoxy resin)

In the grafted diene-grafted epoxy resin of the present disclosure, a diene-based polymer is grafted onto a main chain of an epoxy resin.

By grafting a predetermined diene-based polymer onto an epoxy resin that is usually difficult to be compatible with a rubber material due to the large difference in polarity, the reactivity between the diene-based polymer-grafted epoxy resin and the rubber material is enhanced, and the interfacial compatibility is improved. As a result, the durability (cut resistance, wear resistance, fatigue resistance, etc.) of the rubber material can be significantly improved. An epoxy resin is known to have an effect of improving the reinforcing properties through the interaction with a filler such as silica, and it is possible to obtain a synergistic effect by using the grafted diene-grafted epoxy resin of the present disclosure together with a filler such as silica.

Further, we have found that the diene-based polymer-grafted epoxy resin is better in flexibility, adhesiveness, and other properties than an epoxy resin alone, thereby completing the present disclosure.

The diene-grafted epoxy resin of the present disclosure is not particularly limited except that a diene-based polymer is grafted. However, from the viewpoint of obtaining better durability such as cut resistance, wear resistance, and fatigue resistance, the number average molecular weight (Mn) is preferably 5000 or more, more preferably 20000 or more, and still more preferably 50000 or more.

### (1) Epoxy resin

A diene-grafted epoxy resin of the present disclosure has a main chain of an epoxy resin.

By having an epoxy resin as a main chain, the strength (hardness) of a cured product can be increased.

The state, epoxy equivalent, molecular weight, molecular structure, and the like of the epoxy resin are not limited and can be appropriately selected according to the required performance.

The type of the epoxy resin is not particularly limited, and it can be appropriately selected according to the required performance. Examples of the epoxy resin include a bisphenol A-type epoxy resin, a brominated bisphenol A-type epoxy resin, a bisphenol F-type epoxy resin, a bisphenol AD-type epoxy resin, a stilbene-type epoxy resin, a biphenyl-type epoxy resin, a bisphenol A novolac-type epoxy resin, a cresol novolac-type epoxy resin, a diamino diphenylmethane-type epoxy resin, a tetrakis(hydroxyphenyl)ethane-based epoxy resin, and other polyphenyl-based epoxy resins, a fluorene-containing epoxy resin, triglycidyl isocyanurate, a triazine ring-containing epoxy resin, a heteroaromatic ring-containing epoxy resin, and other aromatic epoxy resins; an aliphatic glycidyl ether-type epoxy resin, an aliphatic glycidyl ester-type epoxy resin, an alicyclic glycidyl ether-type epoxy resin, an alicyclic glycidyl ester-type epoxy resin, and other non-aromatic epoxy resins. These epoxy resins may be used alone or in combination of two or more.

Among the above, the epoxy resin is preferably a bisphenol A-type epoxy resin, and among bisphenol A-type epoxy resins, it is more preferably bisphenol A diglycidyl ether.

A curing agent of the epoxy resin is not particularly limited, and it can be appropriately selected according to the required performance. Examples of the curing agent include metaphenylene diamine, diaminodiphenylmethane, diaminodiphenyl sulfone, benzyldimethylamine, dimethylaminomethyl benzene, and other aromatic amine, a phenolic resin, a phenolic novolac resin, amine with a heteroaromatic ring such as a triazine ring, and other aromatic curing agents; ethylenediamine, diethylenetriamine, triethylenetetramine, tetraethylenepentamine, iminobispropylamine, bis(hexamethylene)triamine, 1,3,6-trisaminomethylhexane, polymethylenediamine, trimethylhexamethylenediamine, polyether diamine, and other aliphatic amines, isophorone diamine, menthane diamine, N-aminoethylpiperazine, 3,9-bis(3-aminopropyl)-2,4,8,10-tetraoxaspiro[5.5]undecane adduct, bis(4-amino-3-methylcyclohexyl)methane, 4,4'-methylenebis(cyclohexylamine) [also called "bis(4-aminocyclohexyl)methane"], modified products thereof, and other alicyclic polyamines, aliphatic polyamidoamines containing other polyamines and dimer acid, and other non-aromatic curing agents. These curing agents may be used alone or in combination of two or more.

Among the above, the curing agent is preferably an amine compound (aromatic amine, amine having a heteroaromatic ring, aliphatic amines, alicyclic polyamines, aliphatic polyamidoamines), and the curing agent is more preferably aliphatic amines.

A cured product of the epoxy resin preferably contains a nitrogen atom. In this case, it is easy to bond to the diene-based polymer, which will be described later, and the compatibility with a rubber material is improved, thereby improving the durability more reliably.

Examples of the cured product of the epoxy resin containing a nitrogen atom include the following reaction.

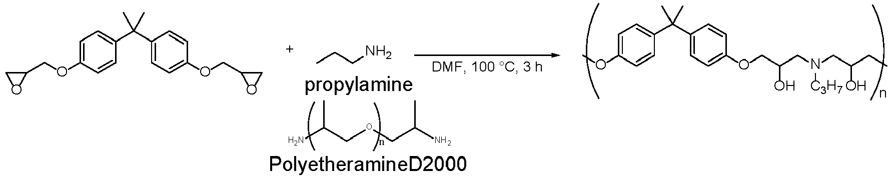

### (2) Diene-based polymer

A diene-grafted epoxy resin of the present disclosure has a diene-based polymer grafted onto the main chain of the epoxy resin.

By having the diene-based polymer as a graft chain, the reactivity between the diene-based polymer-grafted epoxy resin and a rubber material can be enhanced, thereby improving the interfacial compatibility. As a result, the durability (cut resistance, wear resistance, fatigue resistance, etc.) of the rubber material can be significantly improved.

The type of the diene-based polymer is not particularly limited. However, from the viewpoint of improving the compatibility with a rubber material, it is preferably at least one type of rubber selected from the group consisting of polybutadiene rubber, polyisoprene rubber, styrene butadiene rubber, ethylene-butadiene rubber, styrene-ethylene-butadiene rubber, acrylonitrile butadiene rubber, and polychloroprene rubber, and it is more preferably at least one of polybutadiene rubber, polyisoprene rubber, and styrene butadiene rubber.

From the viewpoint of further improving the durability such as cut resistance, wear resistance, and fatigue resistance without deteriorating other physical properties, the grafting amount of the diene-based polymer is preferably 1 mol% to 30 mol% with respect to 100 mol% of the epoxy resin. The reason is as follows. When the grafting amount of the diene-based polymer is 1 mol% or more with respect to 100 mol% of the epoxy resin, the compatibility of the epoxy resin can be reliably improved, and the durability can be further improved. When the grafting amount of the diene-based polymer is 50 mol% or less with respect to 100 mol% of the epoxy resin, the epoxy resin can keep good properties such as elastic modulus and strength. From the same point of view, the grafting amount of the diene-based polymer is more preferably 3 mol% to 40 mol% and still more preferably 5 mol% to 30 mol%.

The grafting amount of the diene-based polymer can be determined by measurement of nuclear magnetic resonance spectrum. When all the diene-based polymer to be grafted is consumed, it can be determined by calculations based on a charge ratio of the epoxy resin and the diene-based polymer.

It is sufficient that the diene-grafted epoxy resin of the present disclosure is grafted with a diene-based polymer, but it is preferable that the diene-grafted epoxy resin further contain a boron atom, where the bonding to the main chain of the epoxy resin is preferably achieved via the boron atom. This can improve the efficiency of the graft polymerization reaction and more reliably improve the durability when used with a rubber material.

A method of incorporating the boron atom into the diene-grafted epoxy resin may be as follows. By using, for example, a boronic acid-modified diene-based polymer as the diene-based polymer for grafting, as will be described later, the main chain of the epoxy resin and the diene-based polymer can be bonded via a boron atom (that is, the boron atom can be incorporated into the diene-grafted epoxy resin).

Examples of the boronic acid-modified diene-based polymer include boronic acid-modified butadiene rubber, boronic acid-modified isoprene rubber, and boronic acid-modified styrene-butadiene rubber.

### (3) Method of producing diene-grafted epoxy resin

A method of producing a diene-grafted epoxy resin of the present disclosure is not particularly limited if it is a method capable of grafting the above-described diene-based polymer onto the main chain of the epoxy resin. For example, a diene-grafted epoxy resin (butadiene-grafted epoxy resin) can be obtained by reacting a nitrogen atom-containing epoxy resin with a boronic acid-modified diene-based polymer, as described below (in the following formula (BR-B(OEt)₂ or BR-B(OH)₂), BR means butadiene rubber as an example of the diene-based polymer).

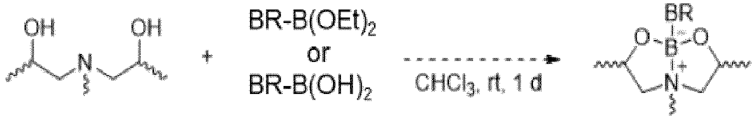

The reaction between the nitrogen atom-containing epoxy resin and the boronic acid-modified diene-based polymer can be carried out, for example, by mixing them in a solvent such as chloroform and then evaporating the solvent. When the epoxy resin contains a nitrogen atom and the diene-based polymer is modified with boronic acid, they react with each other at each reaction point, rendering the production easy.

### (Rubber composition)

A rubber composition of the present disclosure contains a rubber component and the diene-grafted epoxy resin of the present disclosure described above.

With this composition, the reactivity between the diene-grafted epoxy resin of the present disclosure and the rubber component is improved, and the compatibility of the epoxy resin is improved. As a result, the durability (cut resistance, wear resistance, fatigue resistance, etc.) of the rubber composition can be improved.

The content of the diene-grafted epoxy resin in the rubber composition of the present disclosure is preferably 1 part by mass to 50 parts by mass with respect to 100 parts by mass of the rubber component. When the content of the diene-grafted epoxy resin is 1 part by mass with respect to 100 parts by mass of the rubber component, sufficiently durability of the rubber composition can be ensured. When the content of the diene-grafted epoxy resin is 50 parts by mass or less with respect to 100 parts by mass of the rubber component, deterioration of other physical properties such as the crack growth resistance and the heat generating properties can be suppressed. From the same point of view, the content of the diene-grafted epoxy resin is more preferably 5 parts by mass to 40 parts by mass and still more preferably 10 parts by mass to 30 parts by mass with respect to 100 parts by mass of the rubber component.

Components other than the graft copolymer of the rubber composition of the present disclosure are not particularly limited, and optional components may be contained as required.

The rubber component may be appropriately selected according to the required performance. Examples thereof include natural rubber (NR), butadiene rubber (BR), isoprene rubber (IR), styrene butadiene rubber (SBR), styrene isoprene butadiene rubber (SIBR), chloroprene rubber (CR), acrylonitrile butadiene rubber (NBR), ethylene-butadiene rubber, styrene-ethylene-butadiene rubber, and other diene-based rubber, ethylene propylene diene rubber (EPDM), ethylene propylene rubber (EPM), butyl rubber (IIR), and other non-diene-based rubber. Among the above, from the viewpoint of obtaining high compatibility with the diene-grafted epoxy resin and further improving the durability, it is preferable to contain at least one of the above including the diene-based rubber.

From the viewpoint of further improving the durability such as cut resistance, wear resistance, and fatigue resistance, the rubber composition of the present disclosure preferably further contains a reinforcing filler.

The reinforcing filler may be any reinforcing filler commonly used in the field of rubber, and examples thereof include silica, carbon black, talc, clay, aluminum hydroxide, and titanium oxide. Among the above, it is preferable to contain at least silica from the viewpoint that the durability can be further improved by a synergistic effect with the diene-grafted epoxy resin of the rubber composition.

The type of the silica is not particularly limited. Examples thereof include wet silica, colloidal silica, calcium silicate, and aluminum silicate.

Among the above, the silica is preferably wet silica and more preferably precipitated silica. This is because these silicas have high dispersibility and can further improve the low-loss properties and the wear resistance of the rubber composition. The "precipitated silica" refers to silica obtained by growing silica primary particles in a reaction solution in a neutral to alkali pH range at relatively high temperatures at the early stage of production, and then controllably making the reaction solution acidic to coagulate the primary particles.

Although the silica is not particularly limited, silica having a CTAB specific surface area (specific surface area by cetyltrimethylammonium bromide adsorption) of 70 m²/g or more and 250 m²/g or less can be used, for example. The CTAB specific surface area refers to a value measured according to ASTM D3765-92. Note that the CTAB specific surface area is obtained by assuming an adsorption cross sectional area per one molecule of cetyltrimethylammonium bromide on a silica surface to be 0.35 nm² and calculating the specific surface area (m²/g) based on an adsorbed amount of CTAB.

Further, the BET specific surface area of the silica may be 100 m²/g or more and 250 m²/g or less. The BET specific surface area represents a specific surface area determined with the BET method and can be measured according to ASTM D4820-93 in the present disclosure.

The content of the silica is not particularly limited. For example, it is preferably 10 parts by mass to 160 parts by mass, more preferably 20 parts by mass to 120 parts by mass, and particularly preferably 30 parts by mass to 100 parts by mass with respect to 100 parts by mass of the rubber component.

When the content of the silica is 30 parts by mass or more with respect to 100 parts by mass of the rubber component, a synergistic effect with the diene-grafted epoxy resin can provide better durability than otherwise. When the content of the silica is 100 parts by mass or less with respect to 100 parts by mass of the rubber component, deterioration of the physical properties such as the workability can be suppressed more reliably than otherwise.

The type of the carbon black is not particularly limited. For example, any hard carbon or soft carbon produced with an oil furnace method may be used.

The carbon black is not particularly limited, and examples thereof include carbon black of GPF, FEF, HAF, ISAF, and SAF grade. Carbon black with a nitrogen adsorption specific surface area (N₂SA, measured according to JIS K 6217-2: 2001) of 20 m²/g to 250 m²/g may be used. Among the above, carbon black of ISAF and SAF grade is preferable from the viewpoint of improving the wear resistance of the rubber composition. These carbon blacks may be used alone or in combination of two or more.

The content of the carbon black is not particularly limited. For example, it is preferably 0 parts by mass to 70 parts by mass, more preferably 10 parts by mass to 60 parts by mass, and particularly preferably 20 parts by mass to 50 parts by mass with respect to 100 parts by mass of the rubber component. When the content of the carbon black is 20 parts by mass or more with respect to 100 parts by mass of the rubber component, better durability can be obtained. When the content of the carbon black is 50 parts by mass or less with respect to 100 parts by mass of the rubber component, deterioration of the low heat generating properties can be suppressed more reliably.

The content ratio (mass ratio) between the carbon black and the silica is not particularly limited. For example, it is preferably carbon black: silica = 1: 15 to 3: 1, more preferably carbon black: silica = 1: 12 to 1: 1, and particularly preferably carbon black: silica = 1: 10 to 1: 2. When carbon black: silica is in the range of 1: 15 to 3: 1, the fatigue resistance and the tear resistance can be further improved.

The rubber composition of the present disclosure can contain additives (other components) that are conventionally blended in a rubber composition unless addition of the other components adversely affects the intended effect of the present disclosure. For example, additives such as a silane coupling agent, an age resistor, a cross-linking accelerator, a cross-linking agent, a cross-linking accelerating aid, a softener, stearic acid, an antiozonant, and a surfactant, which are commonly used in the rubber industry, may be contained as appropriate.

When the rubber composition of the present disclosure contains the silica, it preferably further contains a silane coupling agent. This can enhance the dispersibility of the silica and provide better durability.

Examples of the silane coupling agent include bis(3-triethoxysilylpropyl) tetrasulfide, bis(3-triethoxysilylpropyl) trisulfide, bis(3-triethoxysilylpropyl) disulfide, bis(2-triethoxysilylethyl) tetrasulfide, bis(3-trimethoxysilylpropyl) tetrasulfide, bis(2-trimethoxysilylethyl) tetrasulfide, 3-mercaptopropyltrimethoxysilane, 3-mercaptopropyltriethoxysilane, 2-mercaptoethyltrimethoxysilane, 2-mercaptoethyltriethoxysilane, 3-trimethoxysilylpropyl-N,N-dimethylthiocarbamoyl tetrasulfide, 3-triethoxysilylpropyl-N,N-dimethylthiocarbamoyl tetrasulfide, 2-triethoxysilylethyl-N,N-dimethylthiocarbamoyl tetrasulfide, 3-trimethoxysilylpropyl benzothiazolyl tetrasulfide, 3-triethoxysilylpropyl benzothiazolyl tetrasulfide, 3-triethoxysilylpropyl methacrylate monosulfide, 3-trimethoxysilylpropyl methacrylate monosulfide, bis(3-diethoxymethylsilylpropyl) tetrasulfide, 3-mercaptopropyldimethoxymethylsilane, dimethoxymethylsilylpropyl-N,N-dimethylthiocarbamoyl tetrasulfide, and dimethoxymethylsilylpropylbenzothiazolyl tetrasulfide. These silane coupling agents may be used alone or in combination of two or more.

A known age resistor may be used as the age resistor without any limitation. Examples thereof include a phenol-based age resistor, an imidazole-based age resistor, and an amine-based age resistor. These age resistors may be used alone or in combination of two or more.

A known cross-linking accelerator may be used as the cross-linking accelerator without any limitation. Examples thereof include a thiazole-based vulcanization accelerator such as 2-mercaptobenzothiazole, and dibenzothiazyl disulfide; a sulfenamide-based vulcanization accelerator such as N-cyclohexyl-2-benzothiazylsulfenamide, and N-t-butyl-2-benzothiazylsulfenamide; a guanidine-based vulcanization accelerator such as diphenylguanidine; a thiuram-based vulcanization accelerator such as tetramethylthiuram disulfide, tetraethylthiuram disulfide, tetrabutylthiuram disulfide, tetradodecylthiuram disulfide, tetraoctylthiuram disulfide, tetrabenzylthiuram disulfide, and dipentamethylenethiuram tetrasulfide; a dithiocarbamate-based vulcanization accelerator such as zinc dimethyldithiocarbamate; and zinc dialkyldithiophosphate.

The cross-linking agent is not particularly limited. Examples thereof include sulfur, a bismaleimide compound, and peroxide.

Examples of the type of the bismaleimide compound include N,N'-o-phenylenebismaleimide, N,N'-m-phenylenebismaleimide, N,N'-p-phenylenebismaleimide, N,N'-(4,4'-diphenylmethane)bismaleimide, 2,2-bis-[4-(4-maleimidephenoxy)phenyl]propane, and bis(3-ethyl-5-methyl-4-maleimidephenyl)methane. N,N'-m-phenylene bismaleimide and N,N'-(4,4'-diphenylmethane)bismaleimide are preferably used in the present disclosure.

Examples of the cross-linking accelerating aid include zinc white (ZnO), and fatty acid. The fatty acid may be a saturated or unsaturated, linear or branched fatty acid, and the number of carbon atoms of the fatty acid is not particularly limited. For example, it may be a fatty acid having 1 to 30 carbon atoms, preferably 15 to 30 carbon atoms. Specific examples thereof include naphthenic acid such as cyclohexane acid (cyclohexanecarboxylic acid), and alkylcyclopentane having a side chain; saturated fatty acid such as hexanoic acid, octanoic acid, decanoic acid (including branched carboxylic acid such as neodecanoic acid), dodecanoic acid, tetradecanoic acid, hexadecanoic acid, and octadecanoic acid (stearic acid); unsaturated fatty acid such as methacrylic acid, oleic acid, linolenic acid, and linolenic acid; and resin acid such as rosin, tall oil acid, and abietic acid. These cross-linking accelerating aids may be used alone or in combination of two or more. Zinc white and stearic acid are preferably used in the present disclosure.

### <Tire>

The tire of the present disclosure uses the rubber composition of the present disclosure described above. By containing the rubber composition of the present disclosure as a tire material, excellent durability (cut resistance, wear resistance, fatigue resistance, etc.) can be realized.

In the tire of the present disclosure, the portion to which the rubber composition of the present disclosure is applied is not particularly limited, but the rubber composition is preferably used in a tread portion. A tire used the rubber composition of the present disclosure in a tread portion has excellent durability.

The tire of the present disclosure is not particularly limited except that the rubber composition of the present disclosure is used in any of tire members, and the tire can be produced with a conventional method. A gas to be filled in the tire may be as normal air or air whose oxygen partial pressure has been adjusted, or an inert gas such as nitrogen, argon, and helium.

### (Other articles)

The rubber composition of the present disclosure can also be applied to rubber articles other than a tire (hereinafter referred to as "other rubber articles").

Examples of the other rubber articles include, but are not limited to, anti-vibration rubber, seismic isolation rubber, a crawler, a belt, and a hose.

### EXAMPLES

The following describes the present disclosure in further details with reference to examples, but the present disclosure is not limited to these examples.

### (Preparation of diene-grafted epoxy resin)

Epoxy resins and diene-grafted epoxy resins 1 to 4 were prepared under the following conditions.

### (1) Epoxy resin

Bisphenol A diglycidyl ether, and a mixture of propylamine and polyetheramine (D2000) at a molar ratio of 1: 2 as an amine compound were reacted at 100 °C for 30 minutes with reference to Chemical Communications 2018, 54, 12930-12933. to obtain an epoxy resin 1.

### (2) Diene-grafted epoxy resins 1 to 4

BR 1 (molecular weight 5000) and BR 2 (molecular weight 30000) with different molecular weights of polybutadiene moiety were synthesized with reference to Organometallics 1983, 2, 1316. using BR-Li synthesized by anionic polymerization, which were used as boronic acid-modified butadiene (BR-B(OH)₂. Diene-grafted epoxy resins 1 to 4 were obtained by mixing the epoxy resin 1 or 2 and the boronic acid-modified butadiene, respectively, in chloroform at the following ratio, and then evaporating the chloroform to obtain a diene-grafted epoxy resin.
Diene-grafted epoxy resin 1 - epoxy resin 1: 10 g, BR 1: 1.8 g
Diene-grafted epoxy resin 2 - epoxy resin 2: 10 g, BR 2: 11 g
Diene-grafted epoxy resin 3 - epoxy resin 2: 10 g, BR 1: 1.5 g
Diene-grafted epoxy resin 4 - epoxy resin 2: 10 g, BR 2: 8.9 g

The grafting amount of polybutadiene in each diene-grafted epoxy resin was determined by assuming that the epoxy resin and the polybutadiene were all reacted and calculating the grafting amount of polybutadiene in 100 mol% of epoxy. The calculated value will be described later.

### <Examples 1 to 4 and Comparative Examples 1 to 2>

According to the composition listed in Table 1, samples of rubber composition were prepared using a common Banbury mixer, and the samples were subjected to the following evaluation.

### <Evaluation>

### (1) Fatigue resistance

Each sample of rubber composition was vulcanized at 160 °C for 15 minutes to obtain vulcanized rubber, then a dumbbell-shaped test piece was prepared according to JIS K 6270:2001, a test was repeatedly performed under a set of conditions of test strain: 100 %, test frequency: 5 Hz, and test temperature: 40 °C, and the number of repetitions until the sample broke was measured.

An index value with the number of repetitions until the sample of Comparative Example 1 broke being 100 was calculated for evaluation, and the result is listed in Table 1. A large index value indicates that the test repeated for many times until the sample broke, meaning that the sample had good fatigue resistance.

### (2) Tear resistance

Each sample of rubber composition was vulcanized at 160 °C for 15 minutes to obtain vulcanized rubber, and then a tensile test device (manufactured by SHIMADZU CORPORATION) was used to perform a trouser tear testing to measure the tear strength (MPa) according to JIS K6252.

An index value with the tear strength of the sample of Comparative Example 1 being 100 was calculated for evaluation, and the result is listed in Table 1. A large index value indicates that the tear resistance was good, meaning that the sample had excellent durability.

**[Table 1]**

| | | Comparative Example 1 | Comparative Example 2 | Example 1 | Example 2 | Example 3 | Example 4 |
|---|---|---|---|---|---|---|---|
| Composition (parts by mass with respect to 100 parts by mass of rubber component) | Styrene butadiene rubber *1 | 100 | 100 | 100 | 100 | 100 | 100 |
| | Epoxy resin | - | 20 | - | - | - | - |
| | Diene-grafted epoxy resin 1 *2 | - | - | 20 | - | - | - |
| | Diene-grafted epoxy resin 2 *3 | - | - | - | 20 | - | - |
| | Diene-grafted epoxy resin 3 *4 | - | - | - | - | 20 | - |
| | Diene-grafted epoxy resin 4 *5 | - | - | - | - | - | 20 |
| | CB *6 | 5 | 5 | 5 | 5 | 5 | 5 |
| | Silica *7 | 40 | 40 | 40 | 40 | 40 | 40 |
| | Silane coupling agent *8 | 3.2 | 3.2 | 3.2 | 3.2 | 3.2 | 3.2 |
| | Stearic acid | 2.0 | 2.0 | 2.0 | 2.0 | 2.0 | 2.0 |
| | Wax *9 | 2.0 | 2.0 | 2.0 | 2.0 | 2.0 | 2.0 |
| | Age resistor *10 | 1.0 | 1.0 | 1.0 | 1.0 | 1.0 | 1.0 |
| | Sulfur | 1.2 | 1.2 | 1.2 | 1.2 | 1.2 | 1.2 |
| | Vulcanization accelerator DPG *11 | 1.1 | 1.1 | 1.1 | 1.1 | 1.1 | 1.1 |
| | Vulcanization accelerator DM *12 | 1.6 | 1.6 | 1.6 | 1.6 | 1.6 | 1.6 |
| | Vulcanization accelerator NS *13 | 0.6 | 0.6 | 0.6 | 0.6 | 0.6 | 0.6 |
| | Zinc oxide *14 | 2.5 | 2.5 | 2.5 | 2.5 | 2.5 | 2.5 |
| Evaluation | Fatigue resistance | 100 | 134 | 397 | 406 | 151 | 185 |
| | Tear resistance | 100 | 367 | 467 | 731 | 414 | 443 |

| | | | | | | | |
|---|---|---|---|---|---|---|---|
| *1 Styrene butadiene rubber: T2000 *2 Diene-grafted epoxy resin 1: grafting amount of polybutadiene: 5 mol% with respect to 100 mol% of epoxy resin *3 Diene-grafted epoxy resin 2: grafting amount of polybutadiene: 5 mol% with respect to 100 mol% of epoxy resin *4 Diene-grafted epoxy resin 3: grafting amount of polybutadiene: 5 mol% with respect to 100 mol% of epoxy resin *5 Diene-grafted epoxy resin 4: grafting amount of polybutadiene: 5 mol% with respect to 100 mol% of epoxy resin *6 Carbon black: SAF grade carbon black, manufactured by Asahi Carbon Co., Ltd., product name "ASAHI #105" *7 Silica: "NIPSIL AQ" manufactured by TOSOH SILICA CORPORATION *8 Silane coupling agent: "ABC-856" manufactured by Shin-Etsu Chemical Co., Ltd. *9 Wax: Microcrystalline wax, manufactured by Seiko Chemical Co., Ltd *10 Age resistor: manufactured by OUCHI SHINKO CHEMICAL INDUSTRIAL CO.,LTD, product name "NOCRAC 6C" *11 Vulcanization accelerator DPG: manufactured by OUCHI SHINKO CHEMICAL INDUSTRIAL CO.,LTD, product name "NOCCELER D" *12 Vulcanization accelerator MBTS: di-2-benzothiazolyl disulfide, manufactured by OUCHI SHINKO CHEMICAL INDUSTRIAL CO.,LTD, product name "NOCCELER DM-P" *13 Vulcanization accelerator NS: N-tert-butyl-2-benzothiazolylsulfenamide, manufactured by OUCHI SHINKO CHEMICAL INDUSTRIAL CO.,LTD, product name "NOCCELER NS-P (NS)" *14 Zinc oxide: manufactured by HAKUSUI TECH CO.,LTD. | | | | | | | |

According to Table 1, it can be understood that the samples of Examples containing the diene-grafted epoxy resins 1 to 4 of examples of the present disclosure had better results for both fatigue resistance and tear resistance than the sample of Comparative Example 1, indicating that they had excellent durability.

### INDUSTRIAL APPLICABILITY

According to the present disclosure, it is possible to provide an epoxy resin which can improve the durability when used with a rubber material, and a method of producing an epoxy resin.

Further, according to the present disclosure, it is possible to provide a rubber composition and a tire that are excellent in durability such as cut resistance, wear resistance, and fatigue resistance.

## Claims

1. A diene-grafted epoxy resin, wherein a diene-based polymer is grafted onto a main chain of an epoxy resin.

2. The diene-grafted epoxy resin according to claim 1, wherein a grafting amount of the diene-based polymer is 1 mol% to 30 mol% with respect to 100 mol% of the epoxy resin.

3. The diene-grafted epoxy resin according to claim 1 or 2, further comprising a boron atom.

4. The diene-grafted epoxy resin according to claim 3, wherein the diene-based polymer is bonded to the main chain of the epoxy resin via the boron atom.

5. The diene-grafted epoxy resin according to any one of claims 1 to 4, further comprising a nitrogen atom.

6. The diene-grafted epoxy resin according to any one of claims 1 to 5, wherein the diene-based polymer is at least one type of rubber selected from the group consisting of polybutadiene rubber, polyisoprene rubber, styrene butadiene rubber, ethylene-butadiene rubber, styrene-ethylene-butadiene rubber, acrylonitrile butadiene rubber, and polychloroprene rubber.

7. A method of producing a diene-grafted epoxy resin, wherein a boronic acid-modified diene-based polymer is reacted with an epoxy resin containing a nitrogen atom.

8. The method of producing a diene-grafted epoxy resin according to claim 7, wherein the epoxy resin containing a nitrogen atom is obtained by reacting a bisphenol A diglycidyl ether with an amine compound.

9. A rubber composition comprising a rubber component and the diene-grafted epoxy resin according to any one of claims 1 to 6.

10. The rubber composition according to claim 9, wherein a content of the diene-grafted epoxy resin is 1 part by mass to 50 parts by mass with respect to 100 parts by mass of the rubber component.

11. The rubber composition according to claim 10, wherein the rubber composition further comprises silica, and a content of the silica is 10 parts by mass to 100 parts by mass with respect to 100 parts by mass of the rubber component.

12. A tire used the rubber composition according to any one of claims 9 to 11.
